# EUROPÄISCHE PATENTSCHRIFT

(11) **EP 2 710 711 B1**
(45) Veröffentlichungstag und Bekanntmachung des Hinweises auf die Patenterteilung: **10.05.2017**
(21) Anmeldenummer: 12713907.9
(22) Anmeldetag: 20.03.2012
(51) Int. Cl.: H02K 5/167, H02K 5/16, H02K 5/24

(54) **ANLAUFSCHEIBE FÜR EINE ELEKTRISCHE MASCHINE**
THRUST WASHER FOR AN ELECTRIC MACHINE
RONDELLE DE BUTÉE POUR UNE MACHINE ÉLECTRIQUE

(30) Priorität: 18.05.2011 DE 102011076079; 29.12.2011 DE 102011090062
(43) Veröffentlichungstag der Anmeldung: 26.03.2014
(73) Patentinhaber: Robert Bosch GmbH, 70442 Stuttgart (DE)
(72) Erfinder: WINKLER, Wolfgang, 77746 Schutterwald (DE)
(86) Internationale Anmeldenummer: PCT/EP2012/054903
(87) Internationale Veröffentlichungsnummer: WO 2012/156132

(56) Entgegenhaltungen:
- DE-A1- 3 145 601
- DE-A1-102004 044 340
- US-A- 3 573 510

## Beschreibung

Die Erfindung geht aus von einer Anlaufscheibe für eine elektrische Maschine nach dem Oberbegriff des Patentanspruchs 1. Eine derartige Anlaufscheibe für eine elektrische Maschine ist auf einer Welle zwischen einem Lager und einem Rotor, insbesondere einem von Bürsten beaufschlagten, rotierenden elektrischen Kontaktelement und/oder einem Lamellenpaket des Rotors, anordenbar. Die Anlaufscheibe weist einen Bereich zur Dichtung mit zwei Stirnseiten auf und hat an jeder Stirnseite wenigstens einen Anlageabschnitt für das Lager bzw. den Rotor.

### Stand der Technik

Elektromotoren, wie sie üblicherweise für Heiz- und Klimamotoren eingesetzt werden, müssen hohen Geräusch-Anforderung gerecht werden. Einen großen Einfluss darauf hat die sogenannte Ankerlängsschwingung, die über das im Elektromotor befindliche Längsspiel von üblicherweise einigen Zehntel Millimetern im Betrieb angeregt wird. Im Elektromotor befinden sich sogenannte Anlaufscheiben, die zwischen den stehenden Gleit-, Kugel- oder Wälzlagern und dem sich drehenden Anker oder Rotor angeordnet sind und durch ihre Materialeigenschaften - wie Verschleißfestigkeit, Oberfläche, Standzeit etc. - die Reibung mindern. Aufgrund ebenfalls hoher Anforderungen an die Standzeit, d.h. Verschleißfestigkeit, hat das Material - in der Regel elastischer Kunststoff, wie zum Beispiel Polyester-Elastomer - eine geringe eigene Elastizität. Es ist auch bekannt, Wellscheiben oder Wellringe einzubauen. Diese funktionieren aber nur bei Kontakt zwischen den stehenden und drehenden Teile.

Es ist möglich, durch geschickte Wahl von Elastizität und Dämpfung der Anlaufscheibe die Anregung der Axialschwingung soweit zu modifizieren, dass sie im Betrieb gedämpft wird und so zu keiner Geräuschanregung führt. Aus der DE 10 2004 044 340 A1 ist beispielsweise eine Anlaufscheibe der oben genannten Art für eine elektrische Maschine bekannt, bei der die Anlageabschnitte der beiden Stirnseiten über an der Anlaufscheibe ausgebildete, federnde Abschnitte miteinander verbunden sind.

Weitere Anlaufscheiben sind aus der DE 31 45 601 A1, sowie der US 3 573 510 A bekannt. Es ist Aufgabe der Erfindung, eine Anlaufscheibe für eine elektrische Maschine bereitzustellen, die die Dämpfung der Ankerlängsschwingung gegenüber bestehenden Anlaufscheiben in Verbindung mit einer Kostenreduzierung weiter verbessert und die Geräuschanregung weiter verringert.

### Vorteile der Erfindung

Die erfindungsgemäße Anlaufscheibe für eine elektrische Maschine mit den kennzeichnenden Merkmalen des Anspruchs 1 hat den Vorteil, dass die Dämpfung der Ankerlängsschwingung in Verbindung mit einer Verringerung der Geräuschanregung ohne Verwendung von Zusatzteilen (z.B. Wellringe) verbessert werden kann. Zudem ergeben sich eine höhere Verschleißfestigkeit sowie ein einfacher Maschinenaufbau. Zu diesem Zweck ist in erfinderischer Weise zwischen den Anlageabschnitten der beiden Stirnseiten ein zumindest abschnittsweise umlaufender Hohlraum angeordnet. Dieser Hohlraum stellt das Dämpfungselement dar und verändert aufgrund seiner Elastizität die Steifigkeit der Anlaufscheibe im Bereich des Anlageabschnitts, wodurch wiederum die Dämpfung der Ankerlängsschwingung in Verbindung mit einer Verringerung der Geräuschanregung ohne Verwendung von Zusatzteilen (z.B. Wellringe) verbessert werden kann.

Um weiteren Einfluss auf die Dämpfungscharakteristik der Anlaufscheibe nehmen zu können, ist vorgesehen, dass sich der Hohlraum über den gesamten Umfang der Anlageabschnitte erstreckt. Dabei ist der Hohlraum vorzugsweise geschlossen ausgebidlet, während sich sein Querschnitt über den Umfang oder abschnittsweise verändern kann. Zudem werden erfindungsgemäß, entsprechend der gewünschten Dämpfungscharakteristik und/oder in Abhängigkeit von etwaigen Resonanzen der Ankerlängsschwingungen Stützelemente, beispielsweise in Form von Stützstegen, in dem Hohlraum bzw. den Hohlraum-Abschnitten vorgesehen.

Um Kosten bei der Herstellung einzusparen, besteht die Anlaufscheibe in vorteilhafter Weise aus einem einzigen Werkstoff. Hierbei bietet sich insbesondere die Fluidinjektionstechnik als Herstellungsverfahren an. Alternativ ist es auch möglich, die Anlaufscheibe im Bereich des Hohlraumes, vorzugsweise in axialer Richtung mittig durch den Hohlraum, aus zwei Teilen zusammenzufügen. Dabei bietet sich ein Verkleben, Verschweißen oder Lasern zur Verbindung der beiden Einzelteile an.

### Ausführungsbeispiele

### Zeichnung

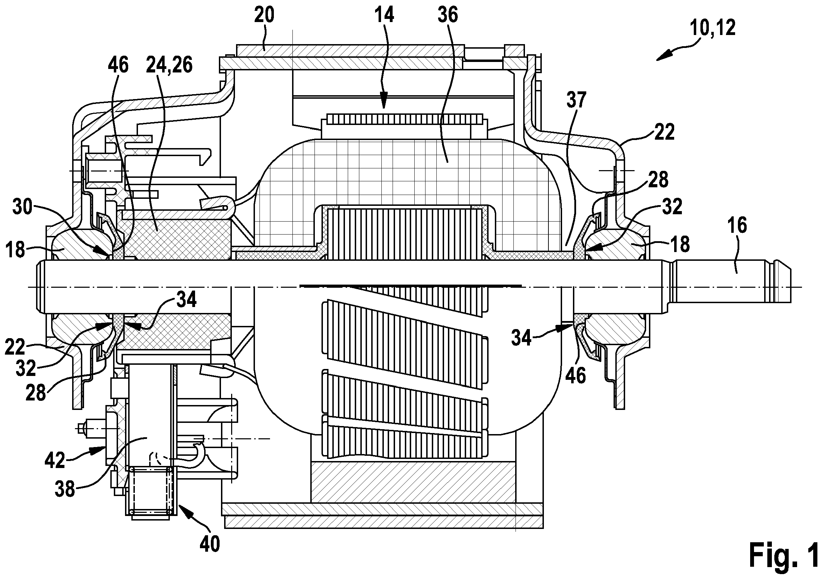

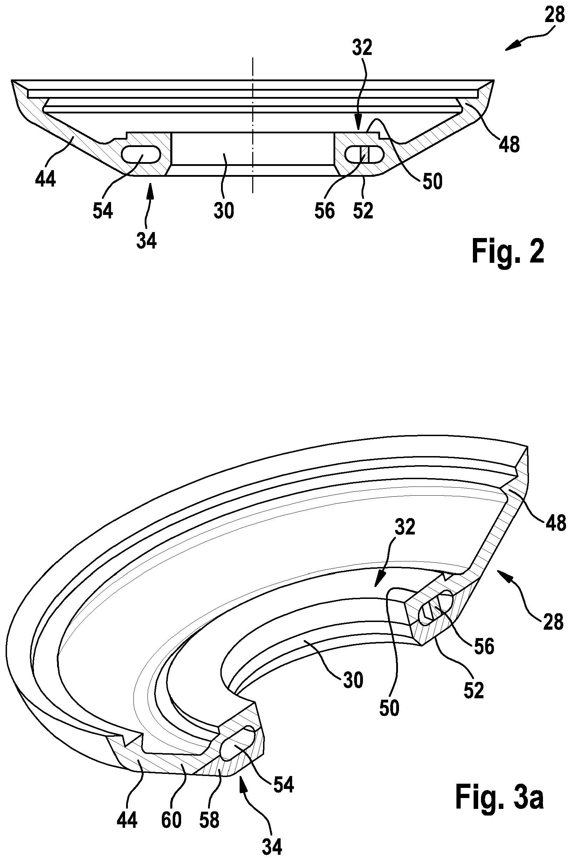

Die Erfindung wird im Folgenden anhand der Figuren 1 und 2 beispielhaft erläutert, wobei gleiche Bezugszeichen in den Figuren auf gleiche Bestandteile mit einer gleichen Funktionsweise hindeuten. Die Figuren der Zeichnung, deren Beschreibung sowie die Ansprüche enthalten zahlreiche Merkmale in Kombination. Ein Fachmann wird diese Merkmale auch einzeln betrachten und zu weiteren sinnvollen Kombinationen zusammenfassen. Insbesondere wird ein Fachmann auch die Merkmale aus unterschiedlichen Ausführungsbeispielen zu weiteren sinnvollen Kombinationen zusammenfassen.

### Es zeigen

Fig. 1: eine elektrische Maschine in einem Längsschnitt,
Fig. 2: eine erste Ausführungsform der erfindungsgemäßen Anlaufscheibe in einem Querschnitt,
Fig. 3: eine weitere Ausführungsform der erfindungsgemäßen Anlaufscheibe in verschiedenen Querschnitten (Fig. 3a, Fig. 3b)

### Beschreibung der Ausführungsbeispiele

In der Figur 1 ist ein Teil einer rotierenden elektrischen Maschine 10 vereinfacht in einem Längsschnitt dargestellt. Die elektrische Maschine 10 ist ein Elektromotor 12, der in einem Kraftfahrzeug beispielsweise in einem Fensterheber, Wischerantrieb, vorzugsweise einem Heiz- und Gebläseantrieb etc., verwendet wird. Es kann jedoch auch ein Generator sein.

Der Elektromotor 12 weist einen bewickelten Rotor 14 auf, der auf einer Welle 16 angeordnet ist. Die Welle 16 ist mit zwei Lagern 18 gelagert. Im vorliegenden Ausführungsbeispiel handelt es sich bei den Lagern 18 um gesinterte Kalottenlager beziehungsweise Gleitlager, die mit Öl getränkt sind. Es können aber auch andere Lager 18, wie etwa Kugellager, Wälzlager oder dergleichen, zum Einsatz kommen. Die Lager 18 sind jeweils in sich an den beiden Stirnseiten eines Gehäuses 20 des Elektromotors 12 befindlichen Lagerschilden 22 angeordnet.

Zwischen einem der Lager 18 und einem als elektrisches Kontaktelement 24 dienenden Kommutator 26 ist auf der Welle 16 eine Anlaufscheibe 28 mit einer Aufnahmebohrung 30 für die Welle 16 angeordnet. Die Anlaufscheibe 28 liegt vorzugsweise mit ihrer ersten Stirnseite 32 am Lager 18 und mit ihrer zweiten Stirnseite 34 am Kommutator 26 an. Vorzugsweise hat die Anlaufscheibne 28 einen Presssitz auf der Welle 16. Durch den Presssitz wird auf der Welle 16 eine Abdichtung gegen vagabundierendes Schmiermittel des Lagers 18 erreicht. Zwischen dem anderen Lager 18 und dem Rotor 14 bzw. einem Lamellenpaket 36 oder dem Bund 37 einer Isolierlamelle des Lamellenpakets 36 ist eine weitere Anlaufscheibe 28 angeordnet. Jedoch kann diese auch entfallen oder eine anders geformte Anlaufscheibe vorgesehen sein. Über die eine oder die beiden Anlaufscheiben 28 stützt sich der Rotor in axialer Richtung der Welle 16 an den Lagern 18 ab.

Anstelle des Kommutators 26 kann als elektrisches Kontaktelement 24 auch ein Kollektor eines Generators vorgesehen sein. In beiden Fällen ist eine elektrische Kontaktierung des elektrischen Kontaktelements 24 über Bürsten 38, die in Bürstenköchern 40 geführt sind, vorgesehen, wobei die Bürstenköcher 40 über Befestigungslaschen an einem Bürstenträger 42 der elektrischen Maschine 10 befestigt sind. Zudem ist auch die Verwendung der erfindungsgemäßen Anlaufscheibe 28 in einem bürstenlosen bzw. elektrisch kommutierten Motor denkbar, wobei der Dichtfunktion der Anlaufscheibe 28 dann ggf. eine untergeordnete Rolle zukäme. Der Begriff "Dichtbereich" soll hier jedoch aus Gründen der Übersichtlichkeit weiterhin verwendet werden.

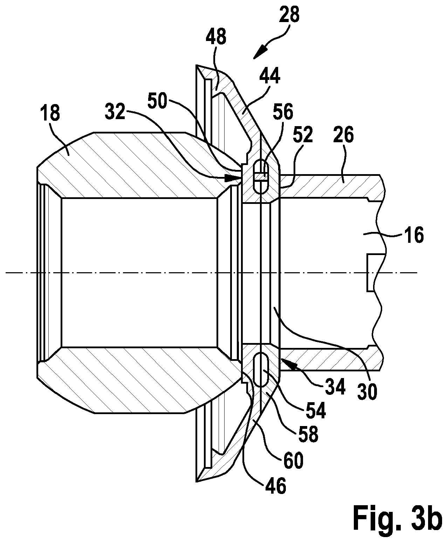

In Figur 2 ist die Anlaufscheibe 28 vergrößert dargestellt. Diese weist einen konisch zulaufenden Bereich 44 zur Schmiermittelrückführung in das Lager 18 auf. Hierzu erstreckt sich die Anlaufscheibe 28 haubenförmig über die ihr zugewandte Stirnseite 46 des Lagers 18 (siehe insbesondere die Figuren 1 und 3b). Am gewölbten, äußeren Rand weist sie eine umlaufende nach innen gerichtete Nase 48 auf. Dadurch kann Schmiermittel, wie zum Beispiel Öl, wieder zum Lager 18 zurückgeführt werden. Der konisch zulaufende Bereich 44 kann alternativ auch gewölbt ausgebildet sein, um den Rückfluss des Öls zu beeinflussen. Wesentlich in Verbindung mit einem bürstenbehafteten Elektromotor bzw. Generator ist jedoch, dass ein Dichtungsbereich zur Gewährleistung der elektrishen Kontaktierung des Kommutators bzw. Kollektors vorgesehen ist.

An der ersten Stirnseite 32 ist ein Anlageabschnitt 50 für das Lager 18 und an der zweiten Stirnseite 34 ein Anlageabschnitt 52 für den Rotor 14 ausgebildet. Die Auflage des Rotors 14 bzw. Ankers kann direkt am Anlageabschnitt 52 oder mittels des Kommutators 26 erfolgen. Die Anlageabschnitte 50 und 52 sind ringförmig ausgebildet.

Erfindungsgemäß ist nun vorgesehen, dass zwischen den Anlageabschnitten 50, 52 der beiden Stirnseiten 32, 34 ein zumindest abschnittsweise umlaufender, vorzugsweise geschlossener Hohlraum 54 angeordnet ist. Dabei besteht die Anlaufscheibe 28 aus einem einzigen Werkstoff und wird vorzugsweise in Fluidinjektionstechnik hergestellt. Unter Fluidinjektionstechnik versteht man in der Kunststoff verarbeitenden Industrie ein Sonderverfahren des Spritzgießens, das aus der Gasinjektionstechnik hervorgeht. Die Unterschiede liegen im Wesentlichen im genutzten Injektionsmedium. Dieses kann Gas (meist Stickstoff) oder Wasser oder beides sein. Der Hohlraum 54 dient als Dämpfungselement und beeinflusst die Steifigkeit der Anlaufscheibe 28 im Bereich zwischen den beiden Anlageabschnitten 50, 52. Er verändert die Struktur der Anlaufscheibe 28 dergestalt, dass mit ihm ein elastischer Bereich erzeugt wird, der durch sein verändertes Steifigkeits- und Dämpfungsverhalten im Betrieb der Ankerlängsschwingung entgegen wirkt und durch seine Federdämpfung eine entsprechende Geräuschanregung verhindert.

Durch die Anordnung und/oder die Form des Hohlraums lässt sich die Dämpfungscharakteristik weiter beeinflussen. So ist es möglich, den Hohlraum nicht nur abschnittsweise sondern auch vollständig umlaufend auszubilden. Ebenso kann der Querschnitt des Hohlraums in seiner Form und seiner Größe abschnittsweise oder über den gesamten Umfang variiert werden. So ist es beispielsweise möglich, statt eines teilovalen Hohlraumquerschnitts, wie in den Figuren dargestellt, auch einen ovalen, kreisrunden oder mehreckigen Querschnitt zu wählen. Weiterhin ist es möglich, in den Hohlraum Stützelemente 56 anzuordnen, die partiellen Einfluss auf die Steifigkeit nehmen. Die Stützelemente 56 können in Form von axialen Stegen ausgebildet sein und äquidistant oder unter Anpassung an ein bestimmtes Resonanzverhalten an definierten Positionen über den Umfang des Hohlraums 54 bzw. der Hohlraumabschnitte verteilt sein.

In den Figuren 3a und 3b ist die Anlaufscheibe 28 in einer weiteren Ausführungsform dargestellt. Im Unterschied zu Figur 2 besteht sie nun aus zwei Teilen 58 und 60, die in axialer Richtung der Welle 16 mittig durch den Hohlraum 54 zusammengefügt sind. Ebenso ist es aber auch denkbar, die beiden Teile 58 und 60 außerhalb des Hohlraums 54, d.h. in dessen näheren Umgebung axial zusammenzufügen. Dabei bietet sich ein Verkleben, Verschweißen oder Lasern der beiden Teile 58 und 60 an.

Es sei abschließend noch darauf hingewiesen, dass das gezeigte Ausführungsbeispiel nicht auf die Figuren 1 bis 3 beschränkt ist, sondern auch hiervon abweichende Einsatzformen und Anordnungen innerhalb der elektrischen Maschine 10 denkbar sind. Zudem haben die in den Figuren gezeigten Dimensionverhältnisse zwischen den erfindungsgemäßen Anlaufscheiben 28 und den übrigen Bauteilen der elektrischen Maschine 10, insbesondere den Lagern 18 und dem Rotor 14, keinen Einfluss auf die Erfindung als solche.

Entsprechendes gilt für die Form und Größe der Stützelemente 56 innerhalb des Hohlraums 54.

## Patentansprüche

1. Anlaufscheibe (28) für eine elektrische Maschine (10, 12) zur Anordnung auf einer Welle (16) zwischen einem Lager (18) und einem Rotor (14), wobei die Anlaufscheibe (28) einen Bereich zur Dichtung mit zwei Stirnseiten (32, 34) aufweist und an jeder Stirnseite (32, 34) wenigstens ein Anlageabschnitt (50, 52) für das Lager (18) bzw. den Rotor (14) vorhanden ist, wobei zwischen den Anlageabschnitten (50, 52) der beiden Stirnseiten (32, 34) ein zumindest abschnittsweise umlaufender Hohlraum (54) angeordnet ist, **dadurch gekennzeichnet, dass** in dem Hohlraum (54) Stützelemente (56) angeordnet sind, die partiellen Einfluss auf die Steifigkeit nehmen.

2. Anlaufscheibe (28) nach Anspruch 1, **dadurch gekennzeichnet, dass** der Rotor (14) ein von Bürsten (38) beaufschlagtes, rotierendes elektrisches Kontaktelement (24) und/oder ein Lamellenpaket (36) aufweist.

3. Anlaufscheibe (28) nach einem der vorhergehenden Ansprüche, **dadurch gekennzeichnet, dass** der Hohlraum (54) geschlossen ausgebildet ist.

4. Anlaufscheibe (28) nach einem der vorhergenden Ansprüche, **dadurch gekennzeichnet, dass** der Hohlraum (54) über den gesamten Umfang der Anlageabschnitte (50, 52) ausgebildet ist.

5. Anlaufscheibe (28) nach einem der vorhergehenden Ansprüche, **dadurch gekennzeichnet, dass** der Hohlraum (54) über den Umfang unterschiedliche Querschnitte, insbesondere ovale, kreisrunde oder mehreckige Querschnitte aufweist.

6. Anlaufscheibe (28) nach einem der vorhergehenden Ansprüche, **dadurch gekennzeichnet, dass** die Anlaufscheibe (28) aus einem einzigen Werkstoff besteht.

7. Anlaufscheibe (28) nach einem der vorhergehenden Ansprüche, **dadurch gekennzeichnet, dass** die Anlaufscheibe (28) in Fluidinjektionstechnik hergestellt ist.

8. Anlaufscheibe (28) nach einem der vorhergehenden Ansprüche, **dadurch gekennzeichnet, dass** die Anlaufscheibe (28) im Bereich des Hohlraumes (54), vorzugsweise in axialer Richtung mittig durch den Hohlraum (54), aus zwei Teilen (58, 60) zusammengefügt ist.

9. Anlaufscheibe (28) nach Anspruch 8, **dadurch gekennzeichnet, dass** die beiden Teile (58, 60) durch ein Verkleben, Verschweißen oder Lasern miteinander verbunden sind.

10. Elektrische Maschine (10, 12) mit zumindest einer Anlaufscheibe (28) nach einem der vorhergehenden Ansprüche.

## Claims

1. Thrust washer (28) for an electric machine (10, 12) which is intended to be arranged on a shaft (16) between a bearing (18) and a rotor (14), wherein the thrust washer (28) has a region for providing sealing having two end faces (32, 34) and has at least one abutment section (50, 52) for the bearing (18) and, respectively, the rotor (14) on each end face (32, 34), wherein a hollow space (54) which is circumferential at least in sections is arranged between the abutment sections (50, 52) of the two end faces (32, 34), **characterized in that** supporting elements (56) which have a partial influence on the rigidity are arranged in the hollow space (54).

2. Thrust washer (28) according to Claim 1, **characterized in that** the rotor (14) has a rotating electrical contact element (24) which is acted on by brushes (38) and/or has a laminate stack (36).

3. Thrust washer (28) according to either of the preceding claims, **characterized in that** the hollow space (54) is of closed design.

4. Thrust washer (28) according to one of the preceding claims, **characterized in that** the hollow space (54) is formed over the entire circumference of the abutment sections (50, 52).

5. Thrust washer (28) according to one of the preceding claims, **characterized in that** the hollow space (54) has different cross sections, in particular oval, circular or polygonal cross sections, over the circumference.

6. Thrust washer (28) according to one of the preceding claims, **characterized in that** the thrust washer (28) is composed of a single material.

7. Thrust washer (28) according to one of the preceding claims, **characterized in that** the thrust washer (28) is produced using a fluid injection technique.

8. Thrust washer (28) according to one of the preceding claims, **characterized in that** the thrust washer (28) is assembled from two parts (58, 60) in the region of the hollow space (54), preferably in the axial direction centrally through the hollow space (54).

9. Thrust washer (28) according to Claim 8, **characterized in that** the two parts (58, 60) are connected to one another by adhesive bonding, welding or lasering.

10. Electric machine (10, 12) having at least one thrust washer (28) according to one of the preceding claims.

## Revendications

1. Rondelle de butée (28) pour une machine électrique (10, 12), destinée à être disposée sur un arbre (16) entre un palier (18) et un rotor (14), la rondelle de butée (28) présentant une région d'étanchéité avec deux côtés frontaux (32, 34), et au niveau de chaque côté frontal (32, 34) étant prévue au moins une portion d'appui (50, 52) pour le palier (18) ou le rotor (14), une cavité au moins en partie périphérique (54) étant disposée entre les portions d'appui (50, 52) des deux côtés frontaux (32, 34), **caractérisée en ce que** des éléments de support (56) sont disposés dans la cavité (54), lesquels influencent en partie la rigidité.

2. Rondelle de butée (28) selon la revendication 1, **caractérisée en ce que** le rotor (14) présente un élément de contact électrique rotatif (24) sollicité par des brosses (38) et/ou un paquet de lamelles (36).

3. Rondelle de butée (28) selon l'une quelconque des revendications précédentes, **caractérisée en ce que** la cavité (54) est réalisée de manière fermée.

4. Rondelle de butée (28) selon l'une quelconque des revendications précédentes, **caractérisée en ce que** la cavité (54) est réalisée sur toute la périphérie des portions d'appui (50, 52).

5. Rondelle de butée (28) selon l'une quelconque des revendications précédentes, **caractérisée en ce que** la cavité (54) présente, sur la périphérie, des sections transversales différentes, en particulier des sections transversales ovales, circulaires ou polygonales.

6. Rondelle de butée (28) selon l'une quelconque des revendications précédentes, **caractérisée en ce que** la rondelle de butée (28) se compose d'un matériau unique.

7. Rondelle de butée (28) selon l'une quelconque des revendications précédentes, **caractérisée en ce que** la rondelle de butée (28) est fabriquée par une technique d'injection de fluide.

8. Rondelle de butée (28) selon l'une quelconque des revendications précédentes, **caractérisée en ce que** la rondelle de butée (28) est assemblée dans la région de la cavité (54), de préférence dans la direction axiale, centralement à travers la cavité (54) à partir de deux-parties (58, 60).

9. Rondelle de butée (28) selon la revendication 8, **caractérisée en ce que** les deux parties (58, 60) sont reliées l'une à l'autre par collage, soudage ou laser.

10. Machine électrique (10, 12) comprenant au moins une rondelle de butée (28) selon l'une quelconque des revendications précédentes.
